# EUROPÄISCHE PATENTSCHRIFT

(11) **EP 2 029 257 B1**
(45) Veröffentlichungstag und Bekanntmachung des Hinweises auf die Patenterteilung: **19.11.2014**
(21) Anmeldenummer: 07729821.4
(22) Anmeldetag: 04.06.2007
(51) Int. Cl.: B01D 46/52, B01D 46/00, F02M 35/024

(54) **KOMPAKTLUFTFILTERELEMENT**
COMPACT AIR FILTER ELEMENT
ÉLÉMENT DE FILTRE À AIR COMPACT

(30) Priorität: 16.06.2006 DE 102006028159
(43) Veröffentlichungstag der Anmeldung: 04.03.2009
(73) Patentinhaber: Mann + Hummel GmbH, 71638 Ludwigsburg (DE)
(72) Erfinder: RIEGER, Mario, 71638 Ludwigsburg (DE)
(86) Internationale Anmeldenummer: PCT/EP2007/055433
(87) Internationale Veröffentlichungsnummer: WO 2007/144279

(56) Entgegenhaltungen:
- EP-A1- 0 470 330
- EP-A1- 1 410 832
- WO-A-83/01582
- WO-A-88/03432
- DE-A1- 19 520 156
- FR-A1- 2 255 933

## Beschreibung

### Technisches Gebiet

Die Erfindung betrifft ein Kompaktluftfilterelement mit einem aus einem gewickelten Filtermedium bestehenden Filterkörper, der über seine Stirnseiten axial durchströmbar ist und der wenigstens ein sich entlang des Umfangs des Filterkörpers erstreckendes Ringdichtungselement aufweist.

### Stand der Technik

In der EP 0470330A1 ist ein Ansaugluftfilter für eine Verbrennungskraftmaschine mit einem in einem Gehäuse angeordneten ringförmigen Filtereinsatz und einem Deckel zum Verschließen des Gehäuses bekannt. Der Filtereinsatz weist ein Befestigungselement auf, das an der Verbindungsstelle zwischen Gehäuse und Deckel eingreift. Der Filtereinsatz wird beim Einbau oder beim Austausch in das Gehäuse eingesetzt und durch das Befestigungselement axial und radial gesichert. Der Gehäusedeckel wird lösbar mit dem Gehäuse verbunden, beispielsweise mit Bügelverschlüssen.

Die Schrift DE 195 20 156 A1 zeigt einen Filter, bestehend aus einem Gehäuse mit einem darin angeordneten Filterelement und einem Abstützelement zur Abstützung des Filtermediums und einem mit einem Verschlusselement befestigten Gehäusedeckel. Die Veröffentlichung WO 88/03432 lehrt einen Flüssigkeitsfilter mit einem mehrteiligen Gehäuse. Die Filtereinheit ist in einem Gehäuse mit Endkappen und einem zylindrischen Mittelteil angeordnet. Das Gehäuse ist über Schraubverbindungen zerlegbar und die Filtereinheit ist herausnehmbar.

Das Dokument EP 1410832 A1 offenbart ein Filterelement, welches in ein zweiteiliges Gehäuse einsetzbar ist, wobei ein Gehäuseteil einen abnehmbaren Deckel bildet. Zur Abdichtung gegenüber dem Gehäuse ist eine Trägerstruktur für ein kompressibles Dichtelement an einer Stirnseite des Filterelements angeordnet.

Aus der FR 2 255 933 A1 ist ein radial durchströmbares Rundfilterelement bekannt, welches fest mit einem Gehäuseteil verbunden sein kann.

Aus der DE 32 49 151 C2 ist ein Kompaktluftfilterelement bekannt. Dieses besteht aus einem gewellten und einem glatten Filterpapier. Die Filterpapiere sind miteinander verklebt und dann miteinander zu einem Filterelement der gewünschten Größe aufgewickelt. Dabei erfolgt die Verklebung durch streifenförmigen Auftrag im Kantenbereich derart, dass die Zwischenräume zwischen der gewellten und der glatten Lage abwechselnd an den beiden Stirnseiten verschlossen sind, sodass keine direkte Strömung durch die zwischen den Filterpapieren gebildeten Kanäle möglich ist. Eine Luftströmung gelangt von der Rohluft- zur Reinluftseite zunächst nur in einen Stichkanal hinein, dann durch das Filterpapier hindurch und aus einem Stichkanal auf der anderen Seite wieder heraus. Gegenüber herkömmlichen Faltenfiltern haben diese Kompaktluftfilter den Vorteil, bei gleicher Baugröße eine größere Filterfläche zu bieten bzw. bei gleicher Filterfläche eine kleinere Baugröße zu ermöglichen.

Bei Faltenfiltern wird zum Teil eine Wartung eines Filtermediums derart praktiziert, dass das Filtereinsatzelement dem Gehäuse entnommen und durch Aufschlagen auf eine harte Oberfläche der zwischen den Falten befindliche Staub herausgelöst wird, wodurch die Standzeit des Filtereinsatzelements geringfügig erhöht werden kann, auch wenn nur grobe Partikel heraus gelöst werden und der die Poren des Filtermediums zusetzende Feinstaub verbleibt. Auch unbeabsichtigt kann das Filterelement beim Austausch anschlagen und beschädigt werden. Kommt es beispielsweise bei einem aus Papierlagen gewickelten Kompaktluftfilterelement zu Ablösungen der inneren Klebstoffraupen, welche die gewellte Lage mit der glatten Decklage verbinden und zugleich die zwischen den Lagen gebildeten Kanäle endseitig verschließen, so ist eine direkte Luftströmung durch den Kanal von der Rohluft- zur Reinluftseite möglich. Ist das Kompaktluftfilterelement beispielsweise einem Verbrennungsmotor vorgeschaltet, kann es in Folge zu schweren Motorschäden kommen.

Neben einem Lösen der Klebstoffschicht kann auch das Filterpapier selbst beim Aufschlagen auf eine Oberfläche einreißen, wobei sich der Riss dann möglicherweise bis über die Klebstoffraupe hinweg erstreckt. Auch in diesem Fall wäre eine Durchströmung des Kompaktluftfilterelements mit Schmutz befrachteter Luft möglich.

### Offenbarung der Erfindung

Aufgabe der Erfindung ist es daher, ein Kompaktluftfilterelement der eingangs genannten Art so zu verbessern, dass es gegenüber einer unsachgemäßen Handhabung besser geschützt ist.

Gelöst wird die Aufgabe durch ein Kompaktluftfilterelement mit den Merkmalen des Anspruchs 1. Danach ist vorgesehen ein Kompaktluftfilterelement mit einem aus einem gewickelten Filtermedium bestehenden Filterkörper, der wenigstens eine Lage glatten Filterpapiers und eine Lage gewellten Filterpapiers umfasst, welche über im Kantenbereich der Filterpapiere aufgetragene Klebstoffraupen verbunden sind, welche zugleich die zwischen den Papieren gebildeten Kanäle endseitig verschließen, wobei der Filterkörper über seine Stirnseiten axial durchströmbar ist und der wenigstens ein sich im Wesentlichen entlang des Umfangs des Filterkörpers erstreckendes Ringdichtungselement aufweist, dadurch gekennzeichnet, dass der Filterkörper in ein hohles Haubenelement eingesetzt ist und beide Teile über eine flexible Dicht- und Klebeschicht luftdicht und unlösbar miteinander verbunden sind, wobei das Haubenelement einen Teil eines Filtergehäuses ausbildet, wobei das Haubenelement eine der Stirnseiten überdeckt und den Außenumfang des Filterkörpers nur in einem der Stirnseite nahen Umfassungsbereich vollumfänglich umfasst und sich dabei mindestens so weit von der Stirnseite aus derart über die Länge des Filterkörpers erstreckt, dass die Klebstoffraupen im Kantenbereich über brückt werden, wobei der Umfassungsbereich des Haubenelements in einer Außenkante mit einer Ringkantenfläche endet, auf oder an welcher wenigstens ein Ringdichtungselement zur Anlage an einen Dichtungsflansch eines Gehäusetopfelements angeordnet ist.

Vorgeschlagen wird, den Filterkörper in ein Haubenelement einzusetzen und über Klebstoffe und/oder Dichtmassen über den ganzen Umfang dicht damit zu verbinden. Somit wird eine Einheit gebildet, die als Ganzes entnehmbar ist und in ein Gehäusetopfelement einzusetzen ist. Die Wartung ist so denkbar einfach: Die Verbindung des Kompaktluftfilterelements mit dem Gehäusetopfelement, die an Flanschen dichtend miteinander verbunden sind, wird gelöst. Das Gehäusetopfelement verbleibt am Fahrzeug oder an der Maschine. Filterkörper und Haubenelement werden als untrennbare Einheit daraus entnommen und ausgetauscht. Da entweder am Haubenelement oder an einem Dichtflansch des Gehäusetopfelements oder auch an beiden Dichtungen vorhanden sind, braucht das neue Kompaktluftfilterelement nur eingesetzt und wieder verspannt werden.

Bei dem erfindungsgemäßen Kompaktluftfilterelement ist ein stirnseitiger Bereich des Filterkörpers besonders geschützt, der bevorzugt zur Rohluftseite hin ausgerichtet wird. Das insbesondere aus Kunststoff gebildete Haubenelement schützt vor Beschädigungen durch Schläge auf den Kantenbereich, in welchem die Klebstoffraupen enthalten sind, wie auch vor Rissen im Filterpapier. Außerdem verhindert es Biegungen, Quetschungen und Stauchungen des Filterkörpers. Schließlich ist insbesondere bei nichtimprägnierten Filterkörpern auch ein Schutz vor Nässe und Schmutz gegeben. Beispielsweise kann der Monteur bei der Wartung einer Bauarbeitsmaschine das erfindungsgemäße Kompaktluftfilterelement auf dem Haubenelement abstellen, um die Hände frei zu haben. Eine möglicherweise verschmutzte Außenseite des Haubenelements kommt nicht mit dem Reinluftstrom in Berührung.

Nicht ausgeschlossen ist eine Ausführungsform, wo sowohl am Gehäusetopfelement wie am Haubenelement Ringdichtungen eingesetzt oder angeformt sind.

Eine angeformte Dichtung hat den Vorteil, dass sie unverlierbar ist und nicht verrutschen kann.

Eine in eine Aufnahmenut eingesetzte Schnurdichtung kann in einfacher Weise aus bekannten Dichtungsprofilen gebildet werden und kann bei Beschädigungen ausgetauscht werden, was insbesondere dann vorteilhaft ist, wenn die Ringdichtung an dem fest eingebauten und nicht zum regelmäßigen Austausch vorgesehenen Gehäusetopfelement angeordnet ist.

Bevorzugt weist der Umfassungsbereich des Haubenelements einen Ringflansch auf, an dem die Ringkantenfläche mit der Aufnahmenut für das Ringdichtungselement angeordnet ist und an dem rückwärtig wenigstens abschnittsweise entlang des Haubenumfangs Abstützflächen für jeweils wenigstens ein Spannverschlusselement vorgesehen sind. Durch den flanschartig erweiterten Kantenbereich des Haubenelements werden damit mehrere Funktionen zugleich erfüllt.

Erfindungsgemäß ist der Filterkörper aus wenigstens einer Lage glatten Filterpapiers und einer Lage gewellten Filterpapiers umfasst, welche über im Kantenbereich der Filterpapiere aufgetragene Klebstoffraupen verbunden sind, die zugleich die zwischen den Papieren gebildeten Kanäle endseitig verschließen, wobei sich der Umfassungsbereich des Haubenelements wenigstens so weit von der Stirnseite aus über die Länge des Filterkörpers erstreckt, dass die Klebstoffraupen überbrückt werden. Das Haubenelement bildet dann in diesem kritischen Bereich eine harte Schutzschale.

Bevorzugt wird das erfindungsgemäße Kompaktluftfilterelement mit einem einseitig offenen Gehäusetopfelement verwendet, das an seiner offenen Seite mit der Ringkante oder dem Dichtungsflansch des Haubenelements des Kompaktluftfilterelements zu verbinden ist und in das ein aus dem Haubenelement heraus ragender Teil des Filterkörpers einsetzbar ist. Die beiden Hauptkomponenten bilden somit ein Filtergehäuse und sind so aufeinander abgestimmt, dass insbesondere eine sichere Funktion der Abdichtung der beiden Gehäusehälften zueinander gewährleistet ist.

Um im Flanschbereich eine Vorspannung der Dichtung zu bewirken und das Haubenelement mit einem geeigneten Gehäusetopfelement fest verbinden zu können, sind vorzugsweise am Haubenelement über den Umfang verteilt mehrere Spannverschlusselemente angeordnet.

Alternativ oder zusätzlich können das Haubenelement und das Gehäusetopfelement über Vorsprünge oder Ausnehmungen und darin einrastende Schnapphaken miteinander verbunden sein.

Weitere vorteilhafte Ausgestaltungen sind den weiteren Unteransprüchen zu entnehmen und werden nachfolgend mit Bezug auf die Zeichnung näher erläutert.

### Kurze Beschreibung der Zeichnungen

Die Figuren zeigen:
Fig. 1 ein Kompaktluftfilterelement in einer Filtereinheit in perspektivischer Ansicht und
Fig. 2 einen Schnitt entlang der Linie II-II in Fig. 1.

### Ausführungsform(en) der Erfindung

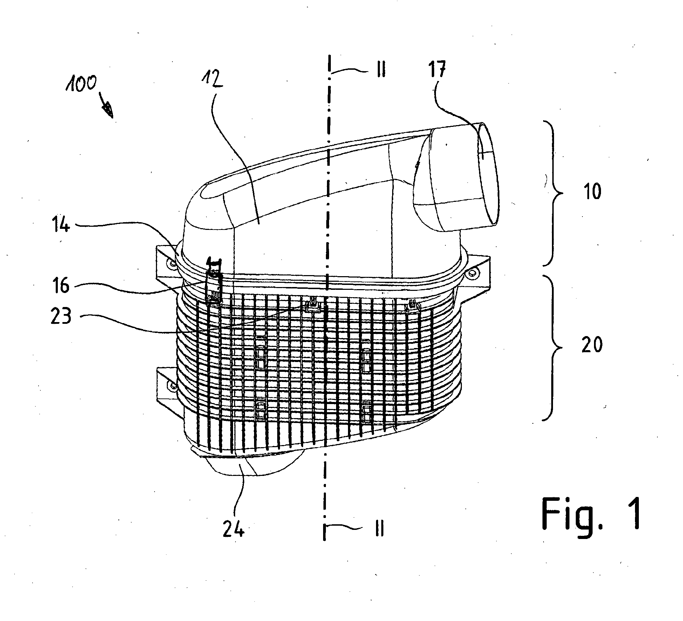

Figur 1 zeigt in einer perspektivischen Darstellung eine Filtereinheit 100, die ein fest zu montierendes Gehäusetopfelement 20 und ein Kompaktluftfilterelement 10 umfasst, welche mit seinem Haubenelement 12 einen Teil des Filtergehäuses ausbildet. Anschlussstutzen 17, 24 dienen der Verbindung mit Schläuchen.

Die Außenkante des Haubenelements 12 ist als Ringflansch 14 ausgebildet, der einmal zur Abdichtung gegenüber dem Gehäusetopfelement 20 dient und außerdem einen Angriffspunkt für über den Umfang des Flansches verteilt angeordnete Spannverschlusselemente 16 bietet, mit denen die beiden Gehäuseteile 10, 20 der Filtereinheit 100 fest aneinander geklemmt werden können. Der Übersichtlichkeit halber ist in Figur 1 nur ein Spannverschlusselement 16 dargestellt.

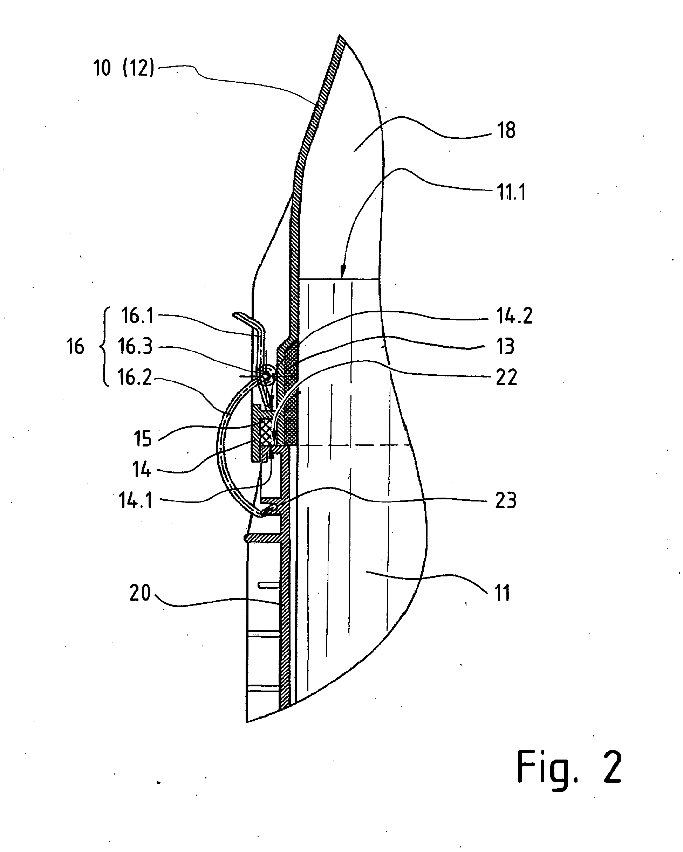

Wesentliche Merkmale des Kompaktluftfilterelements 10 ergeben sich aus der in Figur 2 gezeigten Schnittansicht, wobei es sich um einen Ausschnitt einer Schnittansicht entlang der Linie II-II in Figur 1, beschränkt auf den Bereich des Ringflansches 14, handelt.

Das Kompaktluftfilterelement 10 ist durch ein hohles Haubenelement 12 und einen Filterkörper 11 gebildet. Eine flexible Dicht- und Klebschicht 13 verbindet die beiden Teile luftdicht und unlösbar miteinander. Dabei umfasst das Haubenelement 12 den Filterkörper 11 nur in einem Bereich nahe einer Stirnseite 11.1. Oberhalb davon ist das Haubenelement 12 nicht ausgefüllt. Ein Hohlraum 18 ermöglicht die gleichmäßige Verteilung der am Anschlussstutzen 17 einströmenden Rohluft auf die anströmbare Stirnfläche 11.1 des Filterkörpers 11.

Nach unten ragt der Filterkörper 11 mit einem überwiegenden Teil seiner Länge aus dem Haubenelement 12 heraus. Dieser Teil wird bei der fertigen Filtereinheit 100 vom Gehäusetopfelement 20 umfasst.

An seiner Außenkante ist das Haubenelement 12 durch einen Ringflansch 14 erweitert, der eine Nut zur Aufnahme einer Ringdichtung 15 einschließt. Außerdem dient eine rückwärtige, vom Gehäusetopfelement 20 abgewandte Seite des Ringflansches 14 als Abstützfläche 14.2 für ein Spannelement 16, das sich mit seinem Spannhebel 16.1 hierauf abstützen kann. Der Spannhebel 16.1 ist an einem Gelenk 16.3 mit einem Spannbügel 16.2 verbunden, der in eine Rastaufnahme 23 am Gehäusetopfelement 20 eingerastet ist.

Durch Betätigung des Spannverschlusses 16 wird das Kompaktluftfilterelement 10 mit seiner Ringkantenfläche 14.1, über die das Ringdichtungselement 15 hervor steht, solange es noch nicht vorgespannt ist, auf einen Dichtungsflansch an der Oberkante des Gehäusetopfelements 20 gedrückt. Dabei wird das Ringdichtungselement 15 verpresst und eine dichte Verbindung ausgebildet.

## Patentansprüche

1. Kompaktluftfilterelement (10) mit einem aus einem gewickelten Filtermedium bestehenden Filterkörper (11), der wenigstens eine Lage glatten Filterpapiers und eine Lage gewellten Filterpapiers umfasst, welche über im Kantenbereich der Filterpapiere aufgetragene Klebstoffraupen verbunden sind, welche zugleich die zwischen den Papieren gebildeten Kanäle endseitig verschließen, wobei der Filterkörper (11) über seine Stirnseiten (11.1) axial durchströmbar ist und der wenigstens ein sich im Wesentlichen entlang des Umfangs des Filterkörpers (11) erstreckendes Ringdichtungselement (15) aufweist, **dadurch gekennzeichnet, dass** der Filterkörper (11) in ein hohles Haubenelement (12) eingesetzt ist und beide Teile über eine flexible Dicht- und Klebeschicht (13) luftdicht und unlösbar miteinander verbunden sind, wobei das Haubenelement (12) einen Teil eines Filtergehäuses ausbildet, wobei das Haubenelement eine der Stirnseiten (11.1) überdeckt und den Außenumfang des Filterkörpers (11) nur in einem der Stirnseite nahen Umfassungsbereich vollumfänglich umfasst und sich dabei mindestens so weit von der Stirnseite aus derart über die Länge des Filterkörpers erstreckt, dass die Klebstoffraupen im Kantenbereich überbrückt werden, wobei der Umfassungsbereich des Haubenelements (12) in einer Außenkante mit einer Ringkantenfläche (14.1) endet, auf oder an welcher wenigstens ein Ringdichtungselement (15) zur Anlage an einen Dichtungsflansch (22) eines Gehäusetopfelements (20) angeordnet ist.

2. Kompaktluftfilterelement nach Anspruch 1, **dadurch gekennzeichnet, dass** das Ringdichtungselement an die Ringkantenfläche angeformt ist.

3. Kompaktluftfilterelement (10) nach Anspruch 1, **dadurch gekennzeichnet, dass** das Ringdichtungselement (15) als Schnurdichtung ausgebildet ist.

4. Kompaktluftfilterelement (10) nach Anspruch 1 oder 2, **dadurch gekennzeichnet, dass** am Haubenelement (12) über den Umfang verteilt mehrere Spannverschlusselemente (16) angeordnet sind.

5. Kompaktluftfilterelement (10) nach Anspruch 4, **dadurch gekennzeichnet, dass** der Umfassungsbereich des Haubenelements (12) einen Ringflansch (14) aufweist, an dem die Ringkantenfläche (14.1) mit einer Aufnahmenut für das Ringdichtungselement (15) angeordnet ist und an dem rückwärtig wenigstens abschnittsweise Abstützflächen (14.2) für jeweils wenigstens ein Spannverschlusselement (16) vorgesehen sind.

6. Filtereinheit (100) mit einem Kompaktluftfilterelement (10) nach einem der vorhergehenden Ansprüche und mit einem einseitig offenen Gehäusetopfelement (20), das an seiner offenen Seite mit der Ringkante (14) oder dem Dichtungsflansch des Haubenelements (12) des Kompaktluftfilterelements (10) zu verbinden ist und in das ein aus dem Haubenelement (12) heraus ragender Teil des Filterkörpers (11) einsetzbar ist.

7. Filtereinheit nach Anspruch 6, **dadurch gekennzeichnet, dass** am Haubenelement über den Umfang verteilt mehrere Spannverschlusselemente angeordnet sind.

8. Filtereinheit nach Anspruch 6 oder 7, **dadurch gekennzeichnet, dass** das Haubenelement und das Gehäusetopfelement über Vorsprünge oder Ausnehmungen und darin einrastende Schnapphaken miteinander verbunden sind.

## Claims

1. Compact air filter element (10) with a filter body (11) consisting of a wound filter medium, which comprises at least one layer of smooth filter paper and one layer of wavy filter paper, which are connected via adhesive beads applied in the edge area of the filter papers, which close at the same time the channels formed between the papers on either end, wherein the filter body (11) can be axially flowed through via its front faces (11.1) and which features at least one annular seal element (15) extending substantially along the circumference of the filter body (11), **characterized in that** the filter body (11) is inserted into a hollow hood element (12) and that both parts are connected with each other in an air-tight and undetachable manner via a flexible seal and adhesive layer (13), wherein the hood element (12) forms one part of a filter housing, wherein the hood element covers one of the end faces (11.1) and fully surrounds the outer periphery of the filter body (11) only in a circumferential area near the front face and extends in this case at least so far from the front face across the length of the filter body in such a way that the adhesive beads are bridged in the edge area, wherein the circumferential area of the hood element (12) ends in an outer edge with an annular edge surface (14.1), on or at which at least one annular seal element (15) is disposed for contacting a seal flange (22) of a housing pot element (20).

2. Compact air filter element according to claim 1, **characterized in that** the annular seal element is integrally molded to the annular edge surface.

3. Compact air filter element (10) according to claim 1, **characterized in that** the annular seal element (15) is designed as cord seal.

4. Compact air filter element (10) according to claim 1 or 2, **characterized in that** a plurality of tension lock elements (16) are disposed at the hood element (12) across the circumference.

5. Compact air filter element (10) according to claim 4, **characterized in that** the circumferential area of the hood element (12) comprises an annular flange (14), at which is disposed the annular edge surface (14.1) with a receiving groove for the annular seal element (15) and at the rear side of which at least sectionwise support areas (14.2) for each of at least one tension lock element (16) are provided.

6. Filter unit (100) with a compact air filter element (10) according to one of the above claims and with a housing pot element (20) open on one side, which is to be connected on its open side with the annular edge (14) or with the seal flange of the hood element (12) of the compact air filter element (10) and into which a part of the filter body (11) protruding out of the hood element (12) can be inserted.

7. Filter unit according to claim 6, **characterized in that** a plurality of tension lock elements are disposed at the hood element across the circumference.

8. Filter unit according to claim 6 or 7, **characterized in that** the hood element and the housing pot element are connected with each other via protrusions or recesses and snap-in hooks engaging therein.

## Revendications

1. Élément de filtre à air compact (10) avec un corps de filtre (11) constitué d'un milieu filtrant enroulé qui comprend au moins une couche de papier filtre lisse et une couche de papier filtre ondulé, lesquelles sont assemblées au moyen de cordons de colle appliqués sur les bords des papiers filtres et obturent, à leur extrémité, en même temps les canaux formés entre les papiers, le corps de filtre (11) pouvant être traversé par un flux en sens axial au niveau de ses faces frontales (11.1), et qui présente au moins un élément d'étanchéité annulaire (15) s'étendant essentiellement le long de la circonférence du corps de filtre (11), **caractérisé en ce que** le corps de filtre (11) est inséré dans un élément de capot (12) creux et que les deux parties sont reliées l'une à l'autre de manière étanche à l'air et inamovible par une couche d'étanchéité et de collage (13) flexible, l'élément de capot (12) constituant une partie d'un boîtier de filtre, l'élément de capot recouvrant une des faces frontales (11.1) et enrobant la circonférence extérieure totale du corps de filtre (11) uniquement dans une zone d'enceinte proche de la face frontale et, ce faisant, s'étendant, à partir de la face frontale, sur la longueur du corps de filtre au moins de telle sorte que les cordons de colle soient chevauchés sur les bords, la zone d'enceinte de l'élément de capot (12) se terminant, dans un bord extérieur, par une surface à arête annulaire (14.1) sur laquelle ou contre laquelle au moins un élément d'étanchéité annulaire (15) est disposé en vue de générer un contact avec une bride d'étanchéité (22) d'un élément de pot de boîtier (20).

2. Élément de filtre à air compact selon la revendication 1, **caractérisé en ce que** l'élément d'étanchéité annulaire est moulé sur la surface à arête annulaire.

3. Élément de filtre à air compact (10) selon la revendication 1, **caractérisé en ce que** l'élément d'étanchéité annulaire (15) est exécuté en tant que cordon d'étanchéité.

4. Élément de filtre à air compact (10) selon la revendication 1 ou 2, **caractérisé en ce que** plusieurs éléments de fermeture à genouillère (16) sont répartis sur la circonférence de l'élément de capot (12).

5. Élément de filtre à air compact (10) selon la revendication 4, **caractérisé en ce que** la zone d'enceinte de l'élément de capot (12) présente une bride annulaire (14) sur laquelle est disposée la surface à arête annulaire (14.1) avec une rainure de réception pour l'élément d'étanchéité annulaire (15) et à l'arrière de laquelle sont prévues, au moins sur certaines sections, des surfaces d'appui (14.2) pour respectivement au moins un élément de fermeture à genouillère (16).

6. Unité filtrante (100) avec un élément de filtre à air compact (10) selon l'une des revendications précédentes et avec un élément de pot de boîtier (20) ouvert sur un côté, lequel peut être relié, du côté ouvert, à l'arête annulaire (14) ou à la bride d'étanchéité de l'élément de capot (12) de l'élément de filtre à air compact (10) et dans lequel peut être insérée une partie du corps de filtre (11) dépassant de l'élément de capot (12).

7. Unité filtrante selon la revendication 6, **caractérisé en ce que** plusieurs éléments de fermeture à genouillère sont répartis sur la circonférence de l'élément de capot.

8. Unité filtrante selon la revendication 6 ou 7, **caractérisé en ce que** l'élément de capot et l'élément de pot de boîtier sont reliés l'un à l'autre par le biais de saillies ou d'évidements et de crochets s'encliquetant à l'intérieur.
